Europäisches Patentamt

European Patent Office

Office européen des brevets

(11) Publication number: **0 485 882 A1**

## EUROPEAN PATENT APPLICATION

(21) Application number: 91118958.7

(22) Date of filing: 07.11.91

(51) Int. Cl.5: **C02F 5/10**

(30) Priority: **13.11.90 JP 306725/90**

(43) Date of publication of application:
**20.05.92 Bulletin 92/21**

(84) Designated Contracting States:
**BE DE FR GB NL**

(71) Applicant: **KURITA WATER INDUSTRIES LTD.**
**4-7, Nishishinjuku 3-chome**
**Shinjuku-ku Tokyo(JP)**

(72) Inventor: **Kira, Mayumi, c/o Kurita Water Ind.**
**Ltd.**
**4-7, Nishi-Shinjuku 3-chome**
**Shinjuku-ku, Tokyo(JP)**
Inventor: **Kobayashi, Norimasa, c/o Kurita**
**Water Ind. Ltd.**
**4-7, Nishi-Shinjuku 3-chome**
**Shinjuku-ku, Tokyo(JP)**

(74) Representative: **Türk, Gille, Hrabal**
**Brucknerstrasse 20**
**W-4000 Düsseldorf 13(DE)**

(54) A polymer utilized in water system and a method of treatment of water system.

(57) Concentration of polymer in water system which is utilized for prevention of formation of scale and occurrence of corrosion is measured easily, accurately and promptly and controlled to the optimum concentration by a method comprising labelling of the polymer with a fluorescent substance, addition of the labelled polymer to the water system and measurement of the concentration of the fluorescent substance in the water system.

## BACK GROUND OF THE INVENTION

### 1. Field of the invention

The present invention relates to a novel polymer utilized in water system such as a cooling water system and a boiler water system and an improved method of treatment of cooling water system which comprises addition of the polymer to the water system. More particularly, the present invention relates to a novel polymer utilized in water system which is labelled with a fluorescent substance and an improved method of treatment of water system in which the amount of addition of the polymer to the water system is controlled by measuring concentration of the polymer in the water system through measurement of concentration of the fluorescent substance.

### 2. Description of the prior art

There are many industrial water systems, such as a cooling water system and a boiler water system. For example, cooling water is used in large amounts in many areas of industry, such as chemical industry and steel industry, for the purpose of cooling materials in processes directly or indirectly. Because water resources are becoming limited and efficient utilization of water is required, various methods have been adopted to reduce the amount of water used.

As the methods for reducing the amount of water used, methods of highly efficient utilization of water, such as reduction of the amount of water of forced blow in high concentration operation of the cooling water system of open recycling method, have been widely known.

However, when the methods of highly efficient utilization of water are put in operation, unfavorable phenomena are found to take place, such as frequent troubles caused by water, like occurrence of corrosion and formation of scale in the cooling system, because the quality of cooling water is progressively deteriorated by progressively increased concentration of salts dissolved in the water and like other causes.

To prevent the troubles caused by water, various kinds of agent for treatment of water system have been utilized. Recently, it was found that organic substances, such as polymers of certain kinds, are effective for preventing formation of scale and suppressing occurrence of corrosion and these organic substances are widely used as scale inhibitors and corrosion inhibitors. Examples of polymers conventionally utilized as scale inhibitors and corrosion inhibitors are acrylic acid polymers, maleic acid polymers acrylamide polymers and the like. These polymers exhibit activity to prevent formation of scale and to suppress occurrence of corrosion when they are added to water in an amount in the range from 1 to 100 milligram of solid component per liter of water.

When a polymer is utilized for preventing formation of scale and suppressing occurrence of corrosion, concentration of the polymer in water system is the important factor to exhibit the desired activity with good efficiency. For example, the polymer added to the cooling water is occasionally precipitated because the balance of ions of salts dissolved in the cooling water is varied by formation of scale and by other causes during the high concentration operation of the cooling water system. In such a case, the amount of the polymer dissolved in the cooling water is not kept the same as the amount added to the cooling water. In general practice, the amount of the polymer dissolved in cooling water is measured by a method, such as colorimetry, turbidimetry, a lithium method or a fluorescent tracer method (Laid Open Japanese Patent Publication Heisei 2-115093 and Laid Open Japanese Patent Publication Heisei 2-115697). In the lithium or the fluorescent tracer method, lithium or a fluorescent substance is added as a tracer with any kind of polymers, and residual lithium or fluorescent substance is detected which is believed to be proportional to the residual amount of polymers.

When the colorimetry or the turbidimetry is used for the measurement, automatic operation of the measurement is difficult and the measurement is usually conducted manually. Naturally, there arises the problem that the time required for the measurement is very long. Even when the operation is made automatic, the measurement takes a long time because of reasons based on the principle of the measurement.

The lithium method and the fluorescent tracer method can be conducted in a short time. The polymer is consumed by excessive concentration or formation of scale and the amount of the consumed polymer varies to a large extent depending on the condition of these causes. Either the lithium method or the fluorescent tracer method does not measure the amount of the polymer directly but measures it indirectly and either of them can not measure the amount of consumed polymer when the amount of the consumed polymer is varied to a large extent even though both of them can measure the amount of the polymer added initially to the cooling water.

A method of introducing a fluorescent substance into polyacrylamide which is utilized as a coagulant is disclosed in the United States Patent 4813973. However, introduction of a fluorescent substance into a polymer which prevents formation of scale or corrosion is not disclosed in the above-mentioned patent.

## SUMMARY OF THE INVENTION

The present invention accordingly has an object to provide a polymer utilized in water system the concentration of which in the water system is measured directly, easily, accurately and promptly. Another object of the invention is to provide a method of treatment of water system in which the amount of addition of the polymer utilized in the cooling water is controlled by measuring the concentration of the polymer.

The present invention has been completed as a result of the extensive investigations undertaken with the above objects, leading to a discovery that the concentration of a polymer utilized in water system is directly, easily, accurately and promptly measured by labelling the polymer with a fluorescent substance and by measuring the concentration of the polymer through the measurement of the concentration of the fluorescent substance when the polymer is labelled with the fluorescent substance before it is added to the water system and then added to the water system.

Thus, the polymer of the invention utilized in water system and capable of preventing formation of scale or suppressing occurrence of corrosion is characterized in that the polymer is labelled with a fluorescent substance.

The method of treatment of water system of the invention is characterized in that a polymer for water treatment is labelled with a fluorescent substance and the amount of addition of the polymer for water treatment to the water system is controlled by measuring concentration of the polymer for water treatment in the water system through measurement of concentration of the fluorescent substance.

Other and further objects, features and advantages of the invention will appear more fully from the following description.

## DETAILED DESCRIPTION OF THE INVENTION

The invention is described in detail in the following.

The polymer of the invention is prepared by labelling a fluorescent substance to a base polymer which is utilized in water system and capable of preventing formation of scale or suppressing occurrence of corrosion. The base polymer is a homopolymer or a copolymer of a monomer having a polymerizable double bond and a functional group of various kinds.

Examples of the monomer are compounds having a carboxyl group, such as acrylic acid, maleic acid, itaconic acid, methacrylic acid and the like, and salts of them; compounds having sulfonic acid group, such as vinylsulfonic acid, styrenesulfonic acid, allylsulfonic acid and the like, and salts of them; compounds having hydroxyl group, such as 2-hydroxyethyl methacrylate (HEMA), glycerylo monoallyl ether (GMAE) and the like; compounds having amide group, such as acrylamide, methacrylamide and the like; compounds having amide group and sulfonic acid group, such as 2-acrylamido-2-methylpropanesulfonic acid (AMPS) and the like, and salts of them; compounds having hydroxyl group and sulfonic acid group, such as 3-allyloxy-2-hydroxypropanesulfonic acid (HAPS) and the like, and salt of them; methyl methacrylate; isobutylene; amylene and the like other compounds. The monomer can be homopolymerized, copolymerized in a combination of the monomers shown herein or copolymerized with polymerizable monomers other than those shown herein.

The polymer which has a carboxyl group is preferable. Such preferable examples of the base polymer are polymaleic acid, copolymers of maleic acid and acrylic acid, copolymers of acrylic acid and hydroxyethyl methacrylate or allylsulfonic acid, copolymers of maleic acid and isobutylene, copolymers of maleic acid and amylene, copolymers of maleic acid and styrenesulfonic acid, polyacrylic acid, terpolymers of acrylic acid, hydroxyethyl methacrylate and methyl methacrylate, copolymers of acrylic acid and 3-allyloxy-2-hydroxypropanesulfonic acid, copolymers of acrylic acid and vinylsulfonic acid and salts of these compounds. More preferable examples of the base polymer are polymaleic acid, polyacrylic acid, terpolymers of acrylic acid, hydroxyethyl methacrylate and methyl methacrylate, copolymers of acrylic acid and 3-allyloxy-2-hydroxypropanesulfonic acid and salts of these compounds.

Molecular weight of the base polymer is not particularly limited but generally in the range from 500 to 30,000, preferably in the range from 500 to 10,000.

The fluorescent substance utilized for labelling the base polymer to prepare the polymer of the invention utilized in cooling water and capable of preventing formation of scale or preventing occurrence of corrosion is a fluorescent substance having no functional group or a fluorescent substance having a functional group of various kinds. Examples of the fluorescent substance having no functional group are coumarin, acenaphthylene, fluoresceine, eosin, anthracene, pyrene, perylene and the like. Examples of the fluorescent substance having a functional group of various kinds are compounds having hydroxyl group, such as dibenzosuberenol, dihydroxycoumarin, β-methylunbelliferone, 9-anthracenemethanol, xanthohydrol and the like; compounds having amino group, such as aminocoumarin, aminated 7-hydroxy-4-methylcoumarin, carbohydrazide, succinic acid dihydrozide and the like; compounds having carboxylic acid group, such as 9-anthracenepropionic acid, 2-[4-(1-pyrene)]butanoylaminopropenoic acid and the like; compounds having hydroxyl group and carboxyl group, such as 5-carboxyfluoresceine, 6-carboxyfluoresceine and the like and the like other compounds.

The kind of the fluorescent substance utilized can be suitably selected according to the kind of polymer to which it is labelled. Preferable fluorescent substances are coumarin and derivatives of coumarin because these compounds are less liable to be affected by other fluorescent substances present in the cooling or the boiler water. More preferable fluorescent substances are coumarins having hydroxyl group and coumarins having amino group. Most preferable fluorescent substances are 7-hydroxycoumarin, 7-hydroxy-4-methylcoumarin and 7-hydroxy-4-methyl-aminocoumarin.

Examples of the methods of labelling the base polymer by the fluorescent substance are introduction of the fluorescent substance into the base polymer by using reaction of a functional group in the base polymer with a functional group in the fluorescent substance; preparation of the polymer by polymerization in the presence of the fluorescent substance; and the like other methods.

Examples of method of the introduction of the fluorescent substance into the base polymer by using reaction of a functional group in the base polymer with a functional group in the fluorescent substance are (1) amidization or esterification of carboxyl group of the polymer with amino group or hydroxyl group, respectively, of the fluorescent substance when the base polymer has carboxyl groups; (2) esterification of hydroxyl group of the polymer with carboxyl group of the fluorescent substance when the base polymer has hydroxyl groups; (3) amidization of amino group of the polymer with carboxyl group of the fluorescent substance when the base polymer has amino groups; (4) esterification of amide group of the polymer with hydroxyl group of the fluorescent substance when the base polymer has amide groups; and the like other methods.

In the method of preparation of the polymer by polymerization in the presence of the fluorescent substance, either a fluorescent substance having a functional group or a fluorescent substance having no functional group can be utilized. An example of the method is polymerization of acrylic acid in the presence of the fluorescent substance (a similar method to Macromolecules, volume 22, pages 1159-1165 (1989) and Polymer, volume 27, pages 783-796 (1986)).

As another example of the method of preparation of the polymer by polymerization in the presence of the fluorescent substance, a polymerizable functional group is introduced into the fluorescent substance regardless of the presence or the absence of other functional groups in the substance and then the fluorescent substance is utilized for the polymerization.

It is important in all the methods of labelling the base polymer with the fluorescent substance that a fluorescent substance which is not affected by other structures in the polymer or by other ingredients present is selected and utilized.

The amount of the fluorescent substance in the polymer utilized in cooling or boiler water introduced as the label is generally in the range from 0.01 mol% to 10 mol %, preferably in the range from 0.05 to 1 mol%. When the amount is less than 0.01 mol%, the measurement becomes difficult and, when the amount is more than 10 mol%, the activity to prevent formation of scale and to suppress occurrence of corrosion is affected adversely.

The polymer labelled with a fluorescent substance may be utilized by adding to the water system singly or as a combination with other polymers which are not labelled by fluorescent substances. When a combination of the labelled polymer with polymers without labelling is utilized, the ratio of the labelled polymer to the polymers without labelling is suitably selected according to the desired sensitivity of the measurement.

The amount of addition of the polymer labelled with the fluorescent substance to the water in the water system is preferably in the range from 1 to 100 milligram of the total solid polymer per liter of water in the water system.

An example of the method of controlling the amount of addition of the polymer for water treatment is shown in the following. A sample of the water system is taken and components not dissolved in the water are removed by a suitable method, such as filtration. Intensity of fluorescence is measured on the filtrate by using a fluorescence spectrophotometer adjusted to specified wave lengths. Polymer concentration is obtained from the measured intensity by using a calibration curve which is prepared in advance. The measured polymer concentration is compared with the optimum polymer concentration of the water system and the amount of addition of the polymer is adjusted manually or automatically.

## DESCRIPTION OF THE PREFERRED EMBODIMENTS

The invention will be understood more readily with reference to the following examples; however these examples are intended to illustrate the invention and are not to be construed to limit the scope of the invention.

Example 1

(1) Preparation of 6-amino-7-hydroxy-4-methylcoumarin

(a) Nitration

Into 500 ml of glacial acetic acid in a 1 l beaker, 0.025 mol of 7-hydroxy-4-methylcoumarin was added in small portions under stirring and dissolved. Then, 0.125 mol of 20 % nitric acid was added to the solution and the mixture was stirred for a specified time at the room temperature. The reaction mixture was added dropwise to ultra pure water under stirring and precipitation was formed. After the mixture was stirred for further 5 minutes and then left standing still, the mixture was filtered by No. 5C filter paper under suction and the precipitate was washed with cold water. The precipitate was dried in vacuo to the constant weight.

(b) Amination

Into a 100 ml colorimetry tube, 0.005 mol of the nitrated compound prepared above was charged, heated in a thermostatted water bath maintained at 90°C and stirred. To the nitrated compound, 150 ml of 28% aqueous ammonia was added in small portions under stirring to dissolve the compound. The vessel of the reaction which was initially the colorimetric tube was changed to a 500 conical beaker in the middle of the addition and the addition of ammonia was continued.

Then, 10 % aqueous solution of $FeSO_4 \cdot 7H_2O$ was added to the solution until color of the precipitate formed turned black. Alter the stirring was continued further for a while, the precipitate was filtered by suction by using No. 5C filter paper. The filtrate was kept standing until the temperature of the filtrate is decreased to the room temperature, placed in a refrigerator and kept standing there. The filtrate was filtered by suction by using No. 5C filter paper and concentrated over an electric heater. The concentrated solution was filtered by suction again by using No. 5C filter paper while it was still hot. The filtrate was kept standing until the temperature of the filtrate was decreased to the room temperature, placed in a refrigerator and kept standing there. The solution was filtered by suction by using No. 5C filter paper and the crystalline precipitate obtained was washed with a small amount of cold water. The crystalline precipitate was dissolved in hot ethyl alcohol and the solution was filtered by suction by using No. 5C filter paper while it was still hot. Alter the filtrate was kept standing in a refrigerator, the solvent was removed in vacuo and the remaining solid was dried in vacuo to the constant weight.

(2) Preparation of a labelled polymer

Into a reaction vessel, a solution of 1 g of a copolymer of acrylic acid and hydroxyethyl methacrylate having a number average molecular weight of 3100 and adjusted to pH of 4.7 by using aqueous hydrochloric acid solution was charged and 6.3 ml of ultra pure water was added to the solution under stirring. The pH of the solution was adjusted to 4.7 by using aqueous hydrochloric acid solution. To the solution, 0.02 g of 1-(3-dimethylaminopropyl)-3-ethylcarbodiimide hydrochloride which is a water soluble carbodiimide was added as the dehydration agent and, immediately after the addition of the carbodiimide, 6-amino-7-hydroxy-4-methylcoumarin was added in portions of 19.1 mg. The mixture was stirred for 30 minutes at the room temperature for the reaction.

The reaction mixture was added dropwise to a 50 : 50 mixture of isopropyl alcohol and ethyl alcohol and the polymer was precipitated. The stirring was continued for further 5 minutes after finishing the dropping of the solution. The mixture was kept standing for 24 hours for precipitation. The precipitate prepared was filtered by suction by using No. 5C filter paper and washed with a small amount of ethyl alcohol. The precipitate sticked to the filter paper was scraped into a 100 ml beaker and dried in a vacuum drier. The drying was continued while the weight of the product was measured from time to time and finished when the weight reached to a constant value. The polymer was then weighed and the yield was obtained. Thus, 0.834 g of the labelled polymer containing 0.11 mol % of the fluorescent substance was prepared. Percentage of the reacted fluorescent substance was calculated from the unreacted fluorescent substance remaining dissolved in the mixture of the alcohols and found to be 11.5 %.

(3) Measurement of intensity of fluorescence

A specified amount of the polymer labelled with the fluorescent substance prepared above was weighed and dissolved into ultra pure water to prepare an aqueous solution of the polymer having a specified concentration.

For the measurement of the background intensity of fluorescence by the cooling water, the cooling water sample taken from the operating cooling water system was filtered by filter paper No. 5C (a product of ADVANTEC Co., Ltd.) and served for the measurement. The sample had pH of 8.8, turbidity of 7.0 degree, electric conductivity of 1,180 $\mu$s/cm, M alkalinity of 223 mg/l, calcium hardness of 220 mg/l, content of Fe of 0.24 mg/l, content of $PO_4^{3-}$ of 6.3 mg/l and cycles of concentration of 5.6.

Intensity of fluorescence of the aqueous solution of the polymer prepared above was measured by using a fluorescence spectrophotometer type FP-777® ( a product of Nippon Bunko Kogyo Co., Ltd.) and a quartz cell of 10 mm.

Excitation spectrum and fluorescence spectrum were measured and the wave lengths were set at 325 nm and 453 nm, respectively. The intensity of the labelled polymer having the solid concentration of 10 mg/l was measure in this condition and shown to be 4,500.

To the cooling water taken from the operating cooling water system in which the optimum amount of addition of the polymer is about 10 mg/l, the labelled polymer was added in an amount to make the concentration of the polymer of 10 mg/l. The intensity of fluorescence of the prepared water sample was measured by the same method above and found to be about 4,900.

The intensity of fluorescence by the background cooling water was about 8 % of that by the labelled polymer when the solid concentration of the polymer was 10 mg/l and shown to be in the level which did not actually affect the measurement by using the labelled polymer. When necessary, the intensity of fluorescence by the background cooling water may be measured and used for calibration.

Thus, it was shown that the concentration of the polymer can be directly, easily and promptly measured by adding the labelled polymer to the cooling water to the concentration of about 10 mg/l and by measuring the intensity of fluorescence.

(4) Measurement of the concentration

The labelled polymer was added to the cooling water to make the solid concentration of 10 mg/l and the intensity of the fluorescence was measured. By referring to the calibration curve which was prepared in advance, the concentration of the polymer was found to be 9.9 mg/l. No additional adjustment was required because the value obtained by the measurement shows that the polymer concentration is at the optimum value. The activity for prevention of precipitation of calcium phosphate of the labelled polymer was compared with that of the unlabelled polymer and found to be the same.

Example 2

A labelled polymer was prepared by the same methods as in Example 2 except that, in the process of the preparation of the labelled polymer, the reaction after the addition of 6-amino-7-hydroxy-4-methylcoumarin at the room temperature was conducted for 3 hours in this Example in place of 30 minutes in Example 2 and 0.810 g of the labelled polymer containing 0.06 mol % of the fluorescent substance was prepared in the yield of 6.1 %.

The intensity of fluorescence was measured by using the labelled polymer prepared above in the same condition as in Example 2. The intensity of the solution of the labelled polymer having the solid concentration of 10 mg/l was 5,200. The intensity of fluorescence by the background cooling water was about 8 % of that by the labelled polymer when the solid concentration of the polymer is 10 mg/l and shown to be in the level which did not actually affect the measurement by using the labelled polymer.

The labelled polymer was added to the cooling water to make the solid concentration of 10 mg/l and the intensity of the fluorescence was measured. By referring to the calibration curve which was prepared in advance, the concentration of the polymer was found to be 9.9 mg/l.

Example 3

A labelled polymer was prepared by the same methods as in Example 2 except that, in the process of the preparation of the labelled polymer, the reaction after the addition of 6-amino-7-hydroxy-4-methylcoumarine at the room temperature was conducted for 24 hours in this Example in place of 30 minutes in Example 2 and 0.808 g of the labelled polymer containing 0.11 mol % of the fluorescent substance was prepared in the yield of 10.5 %.

The intensity of fluorescence was measured by using the labelled polymer prepared above in the same condition as in Example 2. The intensity of the solution of the labelled polymer having the solid concentration of 10 mg/l was 4,700. The intensity of fluorescence by the background cooling water was about 8 % of that by the labelled polymer when the solid concentration of the polymer is 10 mg/l and shown to be in the level which did not actually affect the measurement by using the labelled polymer.

The labelled polymer was added to the cooling water to make the solid concentration of 10 mg/l and the intensity of the fluorescence was measured. By referring to the calibration curve which was prepared in advance, the concentration of the polymer was found to be 9.9 mg/l.

Example 4

(1) Preparation of a labelled polymer

Into a mixed solvent composed of 25 ml of ultra pure water and 100 ml of glacial acetic acid, 1 g of polyacrylamide having a number average molecular weight of about 20,000 was added and dissolved by stirring. A solution of 200 mg of xantohydrol well dissolved in 10 ml of glacial acetic acid was added to the resultant solution under stirring. The vessel containing the mixture was covered with aluminum foil to shield from light and the reaction was kept going by stirring for 48 hours or more at the room temperature.

After the reaction was finished, the reaction mixture was added dropwise to 1 l of methanol. The polymer precipitated was filtered and and dissolved again into ultra pure water. The solution was added dropwise to another 1 l of methanol. The polymer precipitated was filtered again and dried in a desiccator in vacuo overnight. Thus, 0.15 g of the labelled polymer containing 0.48 mol % of the fluorescent substance was prepared.

(2) Measurement of intensity of fluorescence

A specified amount of the polymer labelled with the fluorescent substance prepared above was weighed and dissolved into ultra pure water to prepare an aqueous solution of the polymer having a specified concentration.

For the measurement of the background intensity of fluorescence by the cooling water, the cooling water sample taken from the operating cooling water system was filtered by filter paper Toyo Roshi No. 5C (a product of ADVANTEC Co., Ltd.) and served for the measurement. The sample had pH of 8.8, turbidity of 4.5 degree, electric conductivity of 1,340 $\mu$s/cm, M alkalinity of 190 mg/l, calcium hardness of 300 mg/l, content of Fe of 0.50 mg/l, content of $PO_4^{3-}$ of 7.1 mg/l and cycles of concentration of 8.3.

Intensity of fluorescence of the aqueous solution of the polymer prepared above was measured by using a fluorescence spectrophotometer type F-4010® (a product of Hitachi Seisakusho Co., Ltd.) and a quartz cell of 10 mm.

Excitation spectrum and fluorescence spectrum were measured and the wave lengths were set at 241 nm and 592 nm, respectively. The intensity of the labelled polymer having the solid concentration of 10 mg/l was measured in this condition and shown to be 50.6.

The background intensity of fluorescence was measured by using the sample taken from the operating cooling water system in the same condition. The values obtained were 1.6 without filtration and 1.3 with filtration.

The intensity of fluorescence by the background cooling water was about 3 % of that by the labelled polymer when the solid concentration of the polymer is 10 mg/l and shown to be in the level which did not actually affect the measurement by using the labelled polymer.

Thus, it was shown that the concentration of the polymer can be directly, easily and promptly measured by adding the labelled polymer to the cooling water to the concentration of about 10 mg/l and by measuring the intensity of fluorescence.

(3) Measurement of the concentration

The labelled polymer was added to the cooling water to make the solid concentration of 10 mg/l and the intensity of the fluorescence was measured. By referring to the calibration curve which was prepared in advance, the concentration of the polymer was found to be 9.9 mg/l.

Example 5 (Preparation)

To an aqeous solution (43.5%) containing sodium polyacrylate having a number average molecular weight of 3,500 in an amount corresponding to 1 g as solid, 6.3 ml of ultra pure water was added and the solution was adjusted to pH of 4.7 by using aqueous hydrochloric acid solution. To the solution, 0.02 g of 1-(3-dimethylaminopropyl)-3-ethylcarbodiimide which is a water soluble carbodiimide was added as the dehydration agent and, immediately after the addition of the carbodiimide, 19.1 mg of 6-amino-7-hydroxy-4-methylcoumarin was added. The mixture was stirred for 30 minutes at the room temperature for the reaction.

The reaction mixture was added dropwise to a 50 : 50 mixture of isopropyl alcohol and ethyl alcohol and the polymer was precipitated. The stirring was continued for further 5 minutes after finishing the dropping of the solution. The mixture was kept standing for 24 hours for precipitation. The precipitate prepared was filtered by suction by using No. 5C filter paper and washed with a small amount of ethyl alcohol. The precipitate sticked to the filter paper was scraped into a 100 ml beaker and dried in a vacuum drier. The drying was continued while the weight of the product was measured from time to time and finished when the weight reached to a constant value. The polymer was then weighed and the yield was obtained. Thus, 0.9 g of the labelled polymer was obtained.

Example 6 (Preparation)

To an aqeous solution (50%) containing polymaleic acid having a number average molecular weight of 5,000 in an amount corresponding to 1 g as solid, 6.3 ml of ultra pure water was aded and the solution was adjusted to pH of 4.7 by using aqueous hydrochloric acid solution. To the solution, 0.02 g of 1-(3-dimethylaminopropyl)-3-ethylcarbodiimide which is a water soluble carbodiimide was added as the dehydration agent and, immediately after the addition of the carbodiimide, 19.1 mg of 6-amino-7-hydroxy-4-methylcoumarin was added. The mixture was stirred for 30 minutes at the room temperature for the reaction.

The reaction mixture was added dropwise to a 50 : 50 mixture of isopropyl alcohol and ethyl alcohol and the polymer was precipitated. The stirring was continued for further 5 minutes after finishing the dropping of the solution. The mixture was kept standing for 24 hours for precipitation. The precipitate prepared was filtered by suction by using No. 5C filter paper and washed with a small amount of ethyl alcohol. The precipitate sticked to the filter paper was scraped into a 100 ml beaker and dried in a vacuum drier. The drying was continued while the weight of the product was measured from time to time and finished when the weight reached to a constant value. The polymer was then weighed and the yield was obtained. Thus, 0.8 g of the labelled polymer was obtained.

While the invention has been particularly shown and described with reference to preferred embodiments thereof, it will be understood by those skilled in the art that the foregoing and other changes in form and details can be made therein without departing from the spirit and scope of the invention.

To summarize the advantages obtained by the invention, the method of treatment of water system of the invention comprises utilization of the polymer of the invention which is labelled with a fluorescent substance in advance as the polymer for prevention of formation of scale and occurrence of corrosion, addition of the labelled polymer into the water system, measurement of concentration of the polymer in the water system through the intensity of fluorescence of the fluorescent substance and control of the optimum concentration of the polymer by utilizing the result of the measurement. The concentration of the polymer in water system can be obtained easily, accurately and promptly and management of water treatment by the water system can be improved.

**Claims**

1. A polymer utilized in water system and capable of preventing formation of scale or suppressing occurrence of corrosion which is characterized in that the polymer is labelled with a fluorescent substance.

2. A polymer utilized in water system and capable of preventing formation of scale or suppressing occurrence of corrosion as claimed in Claim 1 wherein the fluorescent substance is coumarin or a derivative of coumarin.

3. A polymer utilized in water system and capable of preventing formation of scale or suppressing occurrence of corrosion as claimed in Claim 1 wherein the fluorescent substance is a derivative of coumarin having a hydroxyl group or an amino group.

4. A polymer utilized in water system and capable of preventing formation of scale or suppressing occurrence of corrosion as claimed in Claim 1 wherein the polymer has a molecular weight in the range from 500 to 30,000.

5. A polymer utilized in water system and capable of preventing formation of scale or suppressing occurrence of corrosion as claimed in Claim 1 wherein the content of the fluorescent substance in the polymer is in the range from 0.01 to 10 mol %.

6. A method of treatment of water system which is characterized in that a polymer for the water treatment is labelled with a fluorescent substance and the amount of addition of the polymer for the water treatment to the water system is controlled by measuring concentration of the polymer for the water treatment in the water system through measurement of concentration of the fluorescent substance.

7. A method of treatment of water system as claimed in Claim 6 wherein the fluorescent substance is coumarin or a derivative of coumarin.

8. A method of treatment of water system as claimed in Claim 6 wherein the fluorescent substance is a derivative of coumarin having a hydroxyl group or an amino group.

9. A method of treatment of water system as claimed in Claim 6 wherein the polymer has a carboxyl group and a molecular weight in the range from 500 to 30,000.

10. A method of treatment of water system as claimed in Claim 6 wherein the content of the fluorescent substance in the polymer is in the range from 0.01 to 10 mol %.

11. A method of treatment of water system as claimed in Claim 6 wherein the amount of addition of the polymer for the water treatment to the water system is in the range from 1 to 100 milligram of solid component per liter.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 152 937 (BEVALOID LIMITED) <br> * page 6, line 25 - line 63 * <br> * abstract * <br> --- | 1,6,11 | C02F5/10 |
| Y,D | US-A-4 813 973 (M.A.WINNIK) <br> * the whole document * <br> --- | 1,6 | |
| Y,D | EP-A-0 365 815 (NALCO CHEMICAL COMPANY) <br> * the whole document * <br><br> ----- | 1,6 | |
| | | | TECHNICAL FIELDS SEARCHED (Int. Cl.5) <br><br> C02F <br> G01N <br> C08F |

The present search report has been drawn up for all claims

| Place of search | Date of completion of the search | Examiner |
|---|---|---|
| THE HAGUE | 13 MARCH 1992 | GONZALEZ ARIAS,M.L. |

EPO FORM 1503 03.82 (P0401)